# EUROPÄISCHE PATENTSCHRIFT

(11) **EP 0 851 975 B1**
(45) Veröffentlichungstag und Bekanntmachung des Hinweises auf die Patenterteilung: **26.01.2000**
(21) Anmeldenummer: 96910902.4
(22) Anmeldetag: 19.04.1996
(51) Int. Cl.: F02D 41/30, H02P 8/32

(54) **VERFAHREN UND VORRICHTUNG ZUR ANSTEUERUNG EINES STELLGLIEDES**
METHOD AND DEVICE FOR CONTROLLING AN ACTUATOR ELEMENT
PROCEDE ET DISPOSITIF PERMETTANT D'ACTIONNER UN ELEMENT D'AJUSTEMENT

(30) Priorität: 23.09.1995 DE 19535419
(43) Veröffentlichungstag der Anmeldung: 08.07.1998
(73) Patentinhaber: ROBERT BOSCH GMBH, 70442 Stuttgart (DE)
(72) Erfinder: SCHÖNFELDER, Dietbert, D-70839 Gerlingen (DE); BARBEHÖN, Kai-Lars, D-71634 Ludwigsburg (DE); TAUSCHER, Joachim, D-70499 Stuttgart (DE); DÖRR, Wolfgang, D-71638 Ludwigsburg (DE)
(86) Internationale Anmeldenummer: DE9600694
(87) Internationale Veröffentlichungsnummer: WO9711266

(56) Entgegenhaltungen:
- DE-A- 3 513 791
- GB-A- 2 092 334
- US-A- 4 121 547
- US-A- 4 476 832

## Beschreibung

### Stand der Technik

Die Erfindung betrifft ein Verfahren und eine Vorrichtung zur Ansteuerung eines Stellgliedes, insbesondere eines Stellgliedes in einem Kraftfahrzeug, gemäß den Oberbegriffen der unabhängiger. Ansprüche.

Ein solches Verfahren und eine solche Vorrichtung sind beispielsweise aus der DE-OS 33 25 651 bekannt. Dort wird, um Resonanzen zu vermeiden, die Ansteuerfrequenz abhängig von der Drehzahl vorgegeben. Eine solche Vorgehensweise ist sehr aufwendig und erfordert für jede Drehzahl eine Neuberechnung der Ansteuerfrequenz.

Ferner beschreibt die DE-A-35 13 791 ein elektronisches Regelsystem für Verbrennungsmotoren, das einen Schrittmotor umfaßt. Dieser Schrittmotor wird getaktet mit einer Schrittfrequenz angesteuert. Die Schrittfrequenz wird dabei nach einem vorgegebenen Zeitprogramm schrittweise oder kontinuierlich zwischen einem ersten und einem zweiten Grenzwert verändert.

Desweiteren ist bekannt, daß die Ansteuerfrequenz zwischen einem oder mehreren Werten umgeschaltet wird, wenn die Drehzahl bestimmte Werte annimmt. Nachteilig dabei ist, daß das Stellglied auf solche Umschaltvorgänge mit Schwingungen bzw. mit Schwingungen des Ausgangssignals reagiert.

### Aufgabe der Erfindung

Der Erfindung liegt die Aufgabe zugrunde, bei einem Verfahren und einer Vorrichtung zur Steuerung eines Stellgliedes der eingangs genannten Art Resonanzerscheinungen einfach und kostengünstig zu vermeiden.

Diese Aufgabe wird durch die in den unabhängigen Ansprüchen gekennzeichneten Merkmalen gelöst.

### Vorteile der Erfindung

Bei der beschriebenen Vorgehensweise treten keine harten Umschaltvorgänge auf. Desweiteren ergibt sich im stationären Betrieb, insbesondere in resonanzgefährdeten Betriebsbereichen und in unkritischen Betriebsbereichen eine optimale Stellgliedansteuerung ohne Positionsschwankungen. Im dynamischen Betrieb beispielsweise beim schnellen Durchfahren des Resonanzbereichs ergibt sich ebenfalls eine optimale Stellgliedansteuerung, da hier nur eine geringe oder gar keine Änderung der Ansteuerung erfolgt. Durch den weichen Übergang in kritischen Bereichen ergeben sich nur sehr geringe oder gar keine Auswirkungen auf die Position des Stellgliedes. Ferner wird die Applikation der Steuerung wesentlich vereinfacht.

Vorteilhafte und zweckmäßige Ausgestaltungen und Weiterbildungen der Erfindung sind in den Unteransprüchen gekennzeichnet.

### Zeichnung

Die Erfindung wird nachstehend anhand der in der Zeichnung dargestellten Ausführungsformen erläutert. Es zeigen Figur 1 ein Blockdiagramm der erfindungsgemäßen Vorrichtung zur Ansteuerung eines Stellgliedes, Figur 2 ein Flußdiagramm zur Verdeutlichung der ersten Ausführungsform des erfindungsgemäßen Verfahrens, Figur 3 die Frequenz des Ansteuersignals über der Zeit aufgetragen, Figur 4 ein Flußdiagramm einer zweiten Ausführungsform des erfindungsgemäßen Verfahrens und Figur 5 die Ansteuerfrequenz über der Zeit aufgetragen, die sich bei der zweiten Ausführungsform ergibt.

### Beschreibung der Ausführungsbeispiele

Im folgenden wird die erfindungsgemäße Vorgehensweise am Beispiel eines Spritzverstellers bei einer Dieselbrennkraftmaschine beschrieben. Die erfindungsgemäße Vorgehensweise ist aber nicht auf diese Anwendung beschränkt, sie kann bei allen Stellgliedern, die getaktete angesteuert werden und bei denen Resonanzerscheinungen auftreten können, eingesetzt werden.

Mit dem Spritzversteller kann der Förderbeginn der Kraftstoffpumpe verändert werden. Üblicherweise ist vorgesehen, daß der Förderbeginn bzw. der Einspritzbeginn mittels eines Regelkreises geregelt und daß abhängig von der Regelabweichung das Stellglied angesteuert wird. Der Spritzversteller ist vorzugsweise als elektrohydraulischer Steller ausgebildet. Abhängig von dem Druck mit dem der Steller beaufschlagt wird, nimmt der Spritzversteller unterschiedliche Positionen ein. Der Druck mit dem der Spritzversteller beaufschlagt wird, kann mittels eines Magnetventils beeinflußt werden. Das Magnetventil wird mit einem getakteten Signal beaufschlagt. Das Tastverhältnis und die Frequenz des Signals ist vorgebbar.

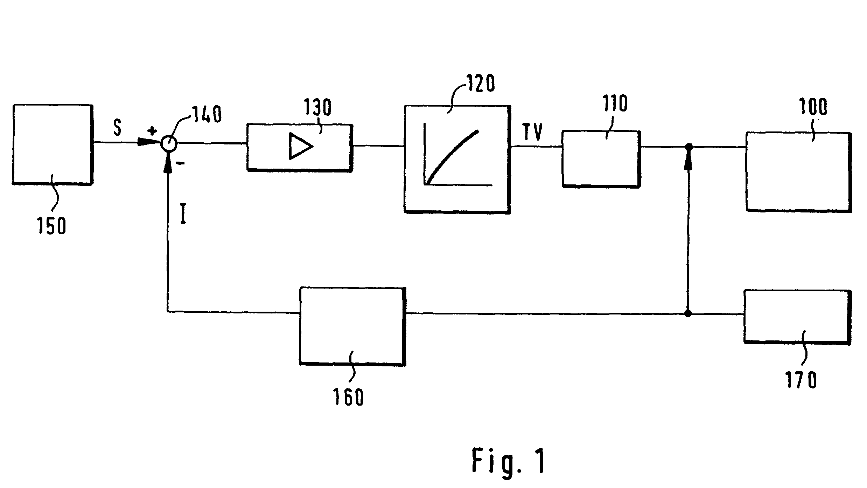

In Figur 1 ist beispielhaft die erfindungsgemäße Vorrichtung in Form eines Blockdiagramms dargestellt. Eine Regelstrecke ist mit 100 bezeichnet. Bei dieser Regelstrecke handelt es sich bevorzugt um den Spritzversteller einer Dieselbrennkraftmaschine. Die Position des Spritzverstellers kann mittels eines Stellgliedes 110 verändert werden. Das Stellglied 110 ist als Magnetventil realisiert. Das Magnetventil wird von einer Ansteuersignalvorgabe 120 mit einem getakteten Signal TV beaufschlagt. Der Ansteuersignalvorgabe 120 wird das Ausgangssignal des Spritzverstellerreglers 130 zugeführt. Der Spritzverstellerregler 130 verarbeitet das Ausgangssignal des Verknüpfungspunktes 140 dem mit positiven Vorzeichen ein Sollwert S einer Sollwertvorgabe 150 und mit negativen Vorzeichen ein Istwert I einer Istwertermittlung 160 zugeleitet. Die Istwertermittlung 160 berechnet ausgehend von dem tatsächlichen Spritzbeginn 170, der beispielsweise mit einem nicht dargestellten Sensor erfaßt wird, die Istgröße für den Spritzverstellerregler 130.

Ausgehend von verschiedenen Betriebskenngrößen berechnet die Sollwertvorgabe 150 den Sollwert S für die Position des Spritzversteller 100. Ausgehend von dem Vergleich zwischen dem Sollwert S und dem Istwert I berechnet der Spritzverstellerregler 130 eine Stellgröße. Ausgehend von dieser Stellgröße berechnet die Ansteuersignalvorgabe 120 ein Signal TV zur Beaufschlagung des Magnetventils 110. Hierbei sind das Tastverhältnis TV und die Ansteuerfrequenz F vorgebbar.

Abhängig von diesem Signal, insbesondere dem Tastverhältnis, stellt sich in dem hydraulischen System ein bestimmter Druck ein und der Spritzversteller nimmt eine entsprechende Position ein. Die Ansteuerfrequenz F besitzt nur einen sehr geringen Einfluß auf die Position des Spritzverstellers. Abhängig von der Position des Spritzverstellers 100 erfolgt die Einspritzung in unterschiedlichen Winkelstellungen der Kurbelwelle der Brennkraftmaschine. Der tatsächliche Einspritzbeginn wird erfaßt und ausgehend von dieser Größe bestimmt die Istwertermittlung 160 den Istwert I für den Regelkreis.

Aufgrund von hydraulischen Effekten treten abhängig von der Ansteuerfrequenz F, der Einspritzfrequenz bzw. der Drehzahl der Brennkraftmaschine Resonanzerscheinungen auf. Regelungen und/oder Steuerungen, bei denen zur Umsetzung der Reglersignale ein getaktetes Stellglied 110 eingesetzt wird, können durch periodische Störsignale, deren Frequenz mit der Stellglied-Ansteuerfrequenz oder deren vielfachen übereinstimmen, in Resonanz geraten, das heißt instabil werden. Bei bestimmten Stellgliedern insbesondere bei dem beschriebenen Stellglied für den Spritzversteller können die Störeinflüsse eindeutig auf bestimmte Betriebszustände zurückgeführt und somit erkannt werden.

Erfindungsgemäß ist vorgesehen, daß die Ansteuerfrequenz F des Stellgliedes im resonanzgefährdeten Bereich über eine Zeitfunktion derart verstimmt wird, daß sich die Störsignalfrequenz von der Ansteuerfrequenz ausreichend unterscheidet. Durch die Applizierbarkeit der zeitlichen Verstimmung kann der entstehende Fehler in der Stellgröße durch den Regler kompensiert werden.

Erfindungsgemäß wurde erkannt, daß die Resonanzeffekte in bestimmten Drehzahlbereichen auftreten. Um diesen Drehzahlbereich wird ein Fenster gelegt. Falls die aktuelle Drehzahl in dieses Fenster eintritt, wird die Verstimmung der Ansteuerfrequenz über eine Zeitrampe aktiviert. Tritt die Drehzahl aus dem Fenster, so kehrt sich der Verlauf der Zeitrampe um und die Verstimmung wird rückgängig gemacht. Bei einem schnellen Übergang über das gesamte Fenster tritt nur eine sehr geringe Verstimmung auf. Überquert die Drehzahl das Fenster sehr langsam oder befindet sie sich stationär im kritischen Bereich, so läuft die Rampe in eine Begrenzung, das heißt die Frequenz des Signals wird auf einem unkritischen Wert gehalten.

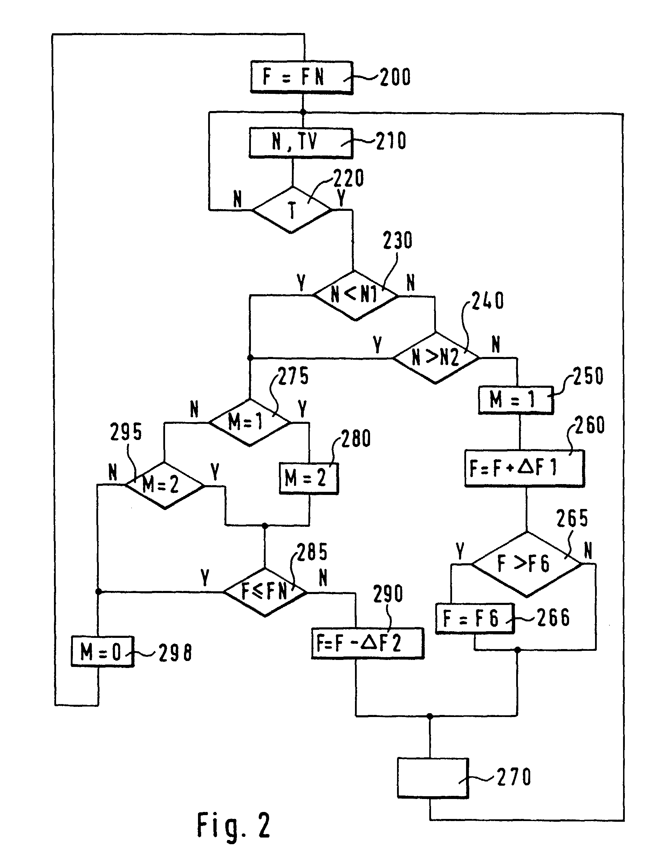

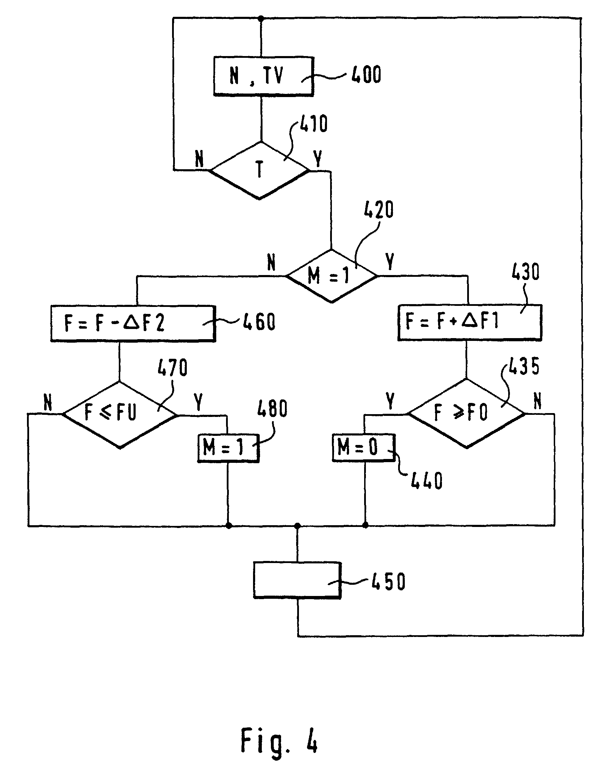

In Figur 2 ist eine Ausführungsform des erfindungsgemäßen Verfahrens zur Vermeidung von Resonanzen aufgetragen. In einem ersten Schritt 200 wird die Ansteuerfrequenz F auf einen vorgebbaren Wert FN gesetzt. Im sich anschließenden Schritt 210 wird die Drehzahl erfaßt und das Tastverhältnis TV bestimmt, mit dem der Steller beaufschlagt werden muß um eine vorgegebene Position zu erreichen.

Die anschließende Abfrage 220 überprüft, ob eine Zeitbedingung T erfüllt ist. Ist dies nicht der Fall, so folgt erneut Schritt 210 andernfalls wenn die Zeitbedingung erfüllt ist, folgt eine Abfrage 230. Diese Abfrage überprüft, ob die Drehzahl kleiner als ein Schwellwert N1 ist. Ist dies nicht der Fall, so überprüft eine Abfrage 240, ob die Drehzahl N größer als ein Schwellwert N2 ist. Ist dies ebenfalls nicht der Fall, so liegt die Drehzahl in dem vorgegebenen Drehzahlfenster, in dem Resonanzeffekte auftreten können. Durch die Drehzahlwerte N1 und N2 wird ein Wertebereich für die Drehzahl definiert, innerhalb dem die Ansteuerfrequenz verstimmt wird.

Wurde erkannt, daß die Drehzahl im Drehzahlfenster liegt, so wird im Schritt 250 ein Merker auf 1 gesetzt. Im sich anschließenden Schritt 260 wird die Frequenz F um einen vorgebbaren Wert ΔF1 erhöht. Dieser Wert ΔF1 bestimmt die Steilheit des Anstieges der Frequenz über der Zeit. Die sich anschließende Abfrage 265 überprüft, ob die Frequenz F einen Grenzwert FG überschritten hat. Ist dies der Fall, so wird im Schritt 266 die Frequenz F auf den Grenzwert FG gesetzt. Anschließend folgt Schritt 270. Ist die Frequenz kleiner als der Grenzwert FG, so folgt unmittelbar der Schritt 270 indem das Stellglied mit diesem so berechneten Ansteuersignal beaufschlagt wird. Anschließend setzt das Programm im Schritt 210 fort.

Erkennen die Abfragen 230 und 240, daß die Drehzahl außerhalb des Fensters liegt, das durch die Drehzahlen N1 und N2 definiert ist, so folgt eine Abfrage 275, die überprüft, ob der Merker M auf 1 gesetzt ist. Ist dies der Fall, so wird im Schritt 280 der Merker auf 2 gesetzt. Die sich anschließende Abfrage 285 überprüft, ob die Frequenz kleiner oder gleich als der zu anfangs gesetzte Frequenzwert FN ist. Ist dies nicht der Fall, so wird die Frequenz im Schritt 290 um einen Wert ΔF2 verringert. Anschließend folgt wieder Schritt 270.

Erkennt die Abfrage 275, daß der Merker ungleich 1 ist, so überprüft eine Abfrage 295, ob der Merker M auf 2 gesetzt ist. Ist dies der Fall, so folgt erneut die Abfrage 285. Erkennt die Abfrage 285, daß die Frequenz kleiner oder gleich ist als die zu anfangs gesetzte Frequenz FN bzw. erkennt die Abfrage 295, daß der Merker ungleich 2 gesetzt ist, so wird in Schritt 298 der Merker M auf 0 gesetzt. Anschließend setzt das Programm mit Schritt 200 fort.

Alternativ kann auch vorgesehen sein, daß innerhalb des Fensters in Schritt 260 die Frequenz F um einen vorgebbaren Wert ΔF verringert und außerhalb des Fensters in Schritt 290 erhöht wird.

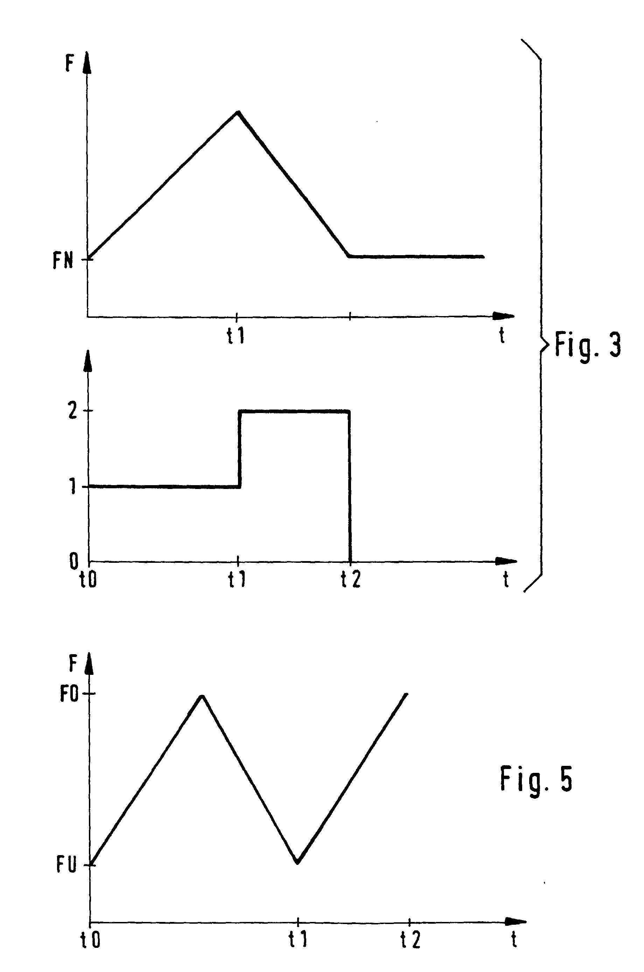

In Figur 3 ist der Inhalt des Merkers M sowie die Frequenz F über der Zeit T aufgetragen. Zu Beginn erkennt die Abfrage 230 und 240, daß sich die Drehzahl innerhalb des Drehzahlfensters befindet. Somit nimmt der Merker M den Wert 1 an, und die Frequenz F steigt mit einer durch die Schrittweite Δ F1 definierten Steilheit an. Zum Zeitpunkt T1 erkennen die Abfragen 230 und 240, daß die Drehzahl das Drehzahlfenster verläßt und vorher der Merker M auf 1 gesetzt ist. Ab diesem Zeitpunkt wird der Merker M auf 2 gesetzt und die Frequenz fällt mit der durch die Größe ΔF2 definierten Steilheit ab, bis sie zum Zeitpunkt T3 den ursprünglichen Wert FN erreicht. Ab dem Zeitpunkt T3 verbleibt die Frequenz auf dem vorgegebenen Wert FN.

Bei einer weiteren Ausführungsform des erfindungsgemäßen Verfahrens wird die Frequenz F des Ansteuersignals für das Stellglied über den ganzen Betriebsbereich zeitkontinuierlich zwischen zwei Grenzfrequenzen verstimmt. Da sich die Störsignalfrequenz durch diese Verfahrensweise in keinem Betriebspunkt über einen längeren Zeitpunkt in Phase mit der Frequenz des Ansteuersignals befindet, sind die Voraussetzungen zur Entstehung von Resonanzen nicht gegeben. Die durch die Änderung der Frequenz des Ansteuersignals entstehenden Fehler des Stellwertes können durch einen ansteuerfrequenzabhängigen Korrekturwert kompensiert werden. Der verbleibende Fehler in der Stellgröße wird durch den Regler kompensiert.

Die erfindungsgemäße Vorgehensweise ist anhand des Flußdiagrammes in Figur 4 dargestellt. In Schritt 400 wird entsprechend wie in Schritt 200 in Figur 2 die Drehzahl erfaßt und das Tastverhältnis bestimmt. Die sich anschließende Abfrage 410 überprüft, ob seit der letzten Abfrage eine Zeitbedingung erfüllt ist. Ist dies nicht erfüllt, so erfolgen erneut Schritt 400. Andernfalls folgt eine Abfrage 420, die überprüft, ob ein Merker den Wert 1 annimmt. Ist dies der Fall, so wird in Schritt 430 die Frequenz F um einen vorgebbaren Wert ΔF1 erhöht.

Die sich anschließende Abfrage 435 überprüft, ob die Frequenz einen oberen Grenzwert FO überschritten hat. Ist dies der Fall, so wird in Schritt 440 der Merker M auf 0 gesetzt. Anschließend an den Schritt 440 bzw. wenn die Frequenz noch nicht größer oder gleich dem oberen Schwellwert F0 ist, folgt Schritt 450, indem der Steller mit einem so berechneten Signal angesteuert wird.

Erkennt die Abfrage 420, daß der Merker ungleich 1 ist, so folgt Schritt 460 indem die Frequenz F um den Wert ΔF2 verringert wird. Die anschließende Abfrage 470 überprüft, ob die Frequenz F kleiner oder gleich einem unteren Schwellwert FU ist. Ist dies der Fall, so wird der Merker im Schritt 480 auf 1 gesetzt. Anschließend an Schritt 480 bzw. wenn die Abfrage 470 erkennt, daß die Frequenz F nicht kleiner oder gleich der unteren Schwelle FU ist, folgt ebenfalls Schritt 450.

Diese Vorgehensweise ist besonders vorteilhaft, wenn die Resonanzeffekte über den gesamten Drehzahlbereich auftreten. Erfindungsgemäß wird ausgehend von der Grundfrequenz FU, auf die sich das zu applizierende Tastverhältniskennfeld bezieht, über eine einstellbare Geschwindigkeit die aktuell wirksame Ansteuerfrequenz F linear erhöht, bis sie einen oberen Grenzwert FO erreicht. Hier kehrt sich die Änderungsrichtung um, die aktuelle wirksame Ansteuerfrequenz F wird bis zur unteren Grenzfrequenz FU erniedrigt.

In Figur 5 ist der Verlauf der Frequenz F über der Zeit T aufgetragen. Ab dem Zeitpunkt T0 steigt die Frequenz von dem Wert FU linear über der Zeit t bis zu dem Frequenzwert FO an, der zum Zeitpunkt T1 erreicht wird. Ab dem Zeitpunkt T1 fällt die Frequenz F über der Zeit t linear bis zum Zeitpunkt T2, bei dem der Wert FU wieder erreicht wird linear über der Zeit ab. Der Verlauf der Ansteuerfrequenz über der Zeit entspricht einer Dreiecksfunktion. Durch die schrittweise Änderung der Frequenz ergibt sich keine exakte linearer Änderung, sondern lediglich eine annähernd lineare Funktion über der Zeit.

Die Grenzwerte FU und FO, die Schrittweiten ΔF1 und ΔF2 sowie die Zeit T können im Rahmen der Applikation vorgegeben werden. Besonders vorteilhaft ist es, wenn für die Schrittweiten ΔF1 und ΔF2 unterschiedliche Werte vorgebbar sind. Alternativ zu dem beschriebenen linearen Anstieg und Abfall der Frequenz über der Zeit, können auch andere Frequenzverläufe über der Zeit gewählt werden. Für die Abhängigkeit der Frequenz von der Zeit können beliebige Funktionen gewählt werden. Vorteilhaft bei dem beschriebenen linearen Verlauf der Frequenz über der Zeit ist die leichte Programmierbarkeit.

## Patentansprüche

1. Verfahren zur Ansteuerung eines getaktet angesteuerten Stellgliedes einer Brennkraftmaschine, wobei die Frequenz des Ansteuersignals zur Vermeidung von Resonanzeffekten veränderbar ist, dadurch gekennzeichnet, daß bei Erreichen vorgegebener Werte der Drehzahl die Frequenz des Ansteuersignals zwischen einem ersten und einem zweiten Frequenzwert gemäß einer vorgegebenen Funktion über der Zeit verändert wird.

2. Verfahren nach Anspruch 1, dadurch gekennzeichnet, daß ausgehend von dem ersten Frequenzwert die Frequenz über der Zeit linear erhöht wird.

3. Verfahren nach Anspruch 1, dadurch gekennzeichnet, daß die Frequenz erhöht wird, wenn die Drehzahl Werte annimmt, die innerhalb eines vorgebbaren Wertebereichs liegen.

4. Verfahren nach Anspruch 2 oder 3, dadurch gekennzeichnet, daß die Frequenz erhöht wird, bis der zweite Frequenzwert erreicht ist und/oder die Drehzahl Werte annimmt, die außerhalb des vorgebbaren Wertebereichs liegen.

5. Verfahren nach einem der Ansprüche 2 bis 4, dadurch gekennzeichnet, daß ausgehend von dem zweiten Frequenzwert die Frequenz über der Zeit verringert wird.

6. Verfahren nach einem der Ansprüche 2 bis 4, dadurch gekennzeichnet, daß die Frequenz verringert wird, wenn die Drehzahl Werte annimmt, die außerhalb des vorgebbaren Wertebereichs liegen.

7. Verfahren nach einem der Ansprüche 2 bis 4, dadurch gekennzeichnet, daß die Frequenz verringert wird, bis der erste Frequenzwert erreicht wird und/oder die Drehzahl Werte annimmt, die außerhalb des vorgebbaren Wertebereichs liegen.

8. Vorrichtung zur Ansteuerung eines getaktet angesteuerten Stellgliedes einer Brennkraftmaschine, wobei die Frequenz des Ansteuersignals zur Vermeidung von Resonanzeffekten veränderbar ist, dadurch gekennzeichnet, daß Mittel vorgesehen sind, die bei Erreichen vorgegebener Werte der Drehzahl die Frequenz des Ansteuersignals zwischen einem ersten und einem zweiten Frequenzwert gemäß einer vorgegebenen Funktion über der Zeit verändern.

9. Vorrichtung nach Ansprüche 8, dadurch gekennzeichnet, daß das Stellglied zur Einstellung eines Spritzverstellers einer selbstzündenden Brennkraftmaschine dient.

## Claims

1. Method for driving an actuator element of an internal combustion engine, the said actuator element being driven in a clocked fashion, the frequency of the drive signal being variable in order to avoid resonance effects, characterized in that when predetermined values of the rotational speed are reached, the frequency of the drive signal is varied between a first and a second frequency value in accordance with a predetermined function over time.

2. Method according to Claim 1, characterized in that the frequency is increased linearly over time, proceeding from the first frequency value.

3. Method according to Claim 1, characterized in the frequency is increased if the rotational speed assumes values lying within a predeterminable range of values.

4. Method according to Claim 2 or 3, characterized in that the frequency is increased until the second frequency value is reached and/or the rotational speed assumes values lying outside the predeterminable range of values.

5. Method according to one of Claims 2 to 4, characterized in that the frequency is reduced over time, proceeding from the second frequency value.

6. Method according to one of Claims 2 to 4, characterized in that the frequency is reduced if the rotational speed assumes values lying outside the predeterminable range of values.

7. Method according to one of Claims 2 to 4, characterized in that the frequency is reduced until the first frequency value is reached and/or the rotational speed assumes values lying outside the predeterminable range of values.

8. Device for driving an actuator element of an internal combustion engine, the said actuator element being driven in a clocked fashion, the frequency of the drive signal being variable in order to avoid resonance effects, characterized in that means are provided which, when predetermined values of the rotational speed are reached, vary the frequency of the drive signal between a first and a second frequency value in accordance with a predetermined function over time.

9. Device according to Claim 8, characterized in that the actuator element serves to set an injection timing mechanism of a self-ignition internal combustion engine.

## Revendications

1. Procédé servant à commander un organe de réglage, commandé de façon cyclique, d'un moteur à combustion interne, dans lequel la fréquence du signal de commande peut être modifiée pour éviter des phénomènes de résonance,
caractérisé en ce que
lorsqu'on atteint des valeurs prédéfinies de la vitesse de rotation, on fait varier en fonction du temps la fréquence du signal de commande entre une première et une deuxième valeur de fréquence selon une fonction prédéfinie

2. Procédé selon la revendication 1,
caractérisé en ce qu'
on augmente linéairement la fréquence en fonction du temps en partant de la première valeur de la fréquence.

3. Procédé selon la revendication 1,
caractérisé en ce qu'
on augmente la fréquence quand la vitesse de rotation prend des valeurs qui se trouvent à l'intérieur d'une zone de valeurs que l'on peut définir au préalable.

4. Procédé selon la revendication 2 ou 3,
caractérisé en ce qu'
on augmente la fréquence jusqu'à ce que soit atteinte la deuxième valeur de la fréquence et/ou jusqu'à ce que la vitesse de rotation prenne des valeurs qui se trouvent en dehors de la zone des valeurs que l'on peut définir au préalable.

5. Procédé selon l'une des revendications 2 à 4,
caractérisé en ce qu'
on abaisse la fréquence en fonction du temps en partant de la deuxième valeur de la fréquence.

6. Procédé selon l'une des revendications 2 à 4,
caractérisé en ce qu'
on réduit la fréquence quand la vitesse de rotation prend des valeurs qui se trouvent en dehors de la zone de valeurs que l'on peut définir au préalable.

7. Procédé selon l'une des revendications 2 à 4,
caractérisé en ce que
la fréquence est réduite jusqu'à ce que la première valeur de fréquence soit atteinte et/ou jusqu'à ce que la vitesse de rotation prenne des valeurs qui se trouvent en dehors de la zone des valeurs que l'on peut définir au préalable.

8. Dispositif servant à commander un organe de réglage, commandé de façon cyclique, d'un moteur à combustion interne, dans lequel la fréquence du signal de commande peut être modifiée pour éviter des phénomènes de résonance,
caractérisé en ce que
des moyens sont prévus, quand des valeurs prédéfinies de la vitesse de rotation sont atteintes, pour modifier la fréquence du signal de commande entre une première et une deuxième valeur de fréquence, selon une première fonction prédéfinie en fonction du temps.

9. Dispositif selon la revendication 8,
caractérisé en ce que
l'organe de réglage sert à régler une commande d'avance à l'injection d'un moteur à combustion interne à allumage spontané.
